# EUROPEAN PATENT APPLICATION

(11) **EP 2 581 685 A1**
(43) Date of publication of application: **17.04.2013**
(21) Application number: 11791963.9
(22) Date of filing: 06.06.2011
(51) Int. Cl.: F24J 2/14, F24J 2/54, F16C 3/02

(54) **STRUCTURE FOR CYLINDRICAL SOLAR COLLECTOR**

(30) Priority: 07.06.2010 ES 201000742
(71) Applicant: Abengoa Solar New Technologies, S.A., 41018 Sevilla (ES)
(72) Inventor: MUÑOZ GILABERT, Felix, 41018 Sevilla (ES)
(74) Representative: Garcia-Cabrerizo y del Santo, Pedro Maria
(86) International application number: PCT/ES2011/000188
(87) International publication number: WO 2011/154567

(57) **Abstract**

The invention relates to a structure for a cylindrical solar collector, comprising a lattice bar structure (16) with a beam or torque box (1) at the centre thereof, said structure being capable of supporting receivers (2) of any shape and continuous or discontinuous primary reflectors (17, 17') also of any shape (parabolic, parametric, etc.). The structure can also support a secondary reconcentrator. According to the invention, the torque box (1) is multi-face polyhedron or cylinder that is divided into various sections (3), each of the sections (3) in turn being formed by multiple plates (4). The surrounding triangular lattice structure (16) is formed with L-sections, all of the connections being formed with rivets or the like. The structure comprises multiple hexagonal frames (19) along the length of the torque box (1), surrounding and reinforcing the latter and multiple supports that hold the receiver above the torque box (1).

## Description

### Technical field of the invention

The present invention is framed within the field of solar collectors; more specifically, it relates to structures used for fastening said collectors, in charge of concentrating solar radiation.

### Background of the invention

Electric power production plants based on solar radiation can use various types of solar collectors (cylindrical collectors, Stirling disc, central towers with heliostats, Fresnel collectors, etc.) and all of them require supporting structures for the mirrors in charge of concentrating the solar radiation.

Within cylindrical collectors, the most popular are cylindrical-parabolic collectors, whose primary reflector is a parabola. Recently, a new type of collector has arisen, known as parametric-cylindrical collectors. These collectors differ from cylindrical-parabolic collectors because the shape of the primary reflector does not correspond to a parabola. In addition, in the case of parametric-cylindrical collectors, there are developments wherein the reflector does not correspond to a continuous curve, but it is divided into sections instead, thus obtaining what is known as a discontinuous primary reflector in order to achieve additional advantages, because it allows the wind to escape and to reduce the associated loads per m² mirror. In other cases, a secondary reconcentrator is also added, generally above the receiver, which increases the concentration of solar radiation on the receiver.

An example of this type of collectors is claimed in the Spanish patent application P200902422 "Parametric cylindrical solar collector having an optimised secondary reconcentrator and method for designing same" (Colector solar cilindrico paramétrico con reconcentrador secundario optimizado y su procedimiento de diseño) of the same applicant.

Said structures, regardless of collector type, generally possess a device known as a solar tracker, which allows them to orient themselves towards the sun, resulting in high performances.

There is a wealth of state of the art relating to the supporting structures of solar collector modules, such as patents US6414237, US5069540, ES2326303, ES2161589, CA1088828, EP0082068, U1070880 and many others.

Many of the inventions of the state of the art describe lattice structures that support collectors of the cylindrical-parabolic type.

The structures that support these collectors are formed by a series of beams, arms and connections, by elements serving as support for the central structure meaning beams, which are also known as torque box. These, are beams that are subjected to great torque and bending stress, and they usually are very long, which causes problems due to the flexure it produces. In addition, it complicates their transport to the plant to a great extent.

Taking into account the state of the art, the objective of the invention claimed herein is to provide a very versatile structure to serve as the support of a solar collector module of the cylindrical type, whether parabolic or parametric, with a continuous or discontinuous primary reflector, with or without a secondary reconcentrator, and that admits any receptor shape. The solar tracker that could be subsequently coupled thereof is not the object of the invention.

In addition to its versatility, and despite being formed by a reticular structure of knots and bars, the invention has a set of characteristics that make it substantially different from the ones known in the state of the art, solving important technical problems affecting this type of collectors, such as the structural resistance of the assembly, load and cost reduction, thus facilitating transport and mounting.

### Description of the invention

The invention consists of a supporting structure for a cylindrical solar collector module.

The main components of the solar field of the cylindrical technology are the following:
- Primary cylindrical reflector: its purpose is to reflect and concentrate the direct solar radiation falling on its surface. The specular surface is obtained by means of silver or aluminium films deposited on a support providing sufficient stiffness. It may be parabolic or parametric and continuous or discontinuous in shape. In the case of a discontinuous shape, the reflector is divided into various segments. One of the most frequent divisions consists of dividing the primary reflector into two parametric segments and one central and elevated parabolic segment. However, other possibilities are valid.
- Receiver: element in charge of absorbing solar energy and through which the fluid being heated circulates. There are receivers of several shapes, the most common of which comprises two concentric tubes, a metallic internal tube through which the fluid circulates and an external glass tube, maintaining the vacuum between them. The structure proposed by the invention is valid for all receiver shapes.
- Secondary reconcentrator: a reflective element that increases the concentration of solar radiation on the receiver, but that is not always installed in the collectors. When installed, it is generally located above the receiver.
- Solar tracker: the most common tracking system consists of a device that rotates the reflector around a shaft.
- Structure: the purpose of the collector structure is to hold and stiffen the assembly of elements composing it. This element is the object of the present invention.

The claimed invention focuses on developing a structure that, unlike the known state of the art, has a number of essential characteristics providing it with important advantages with regard to what already exists in the sector.

These essential characteristics are the following:
1. Central body shape of the torque box type: one of the main characteristics incorporated in the torque box is its change of shape with respect to the state of the art, from having a rectangular or triangular section to being cylindrical or a multi-face polyhedron. Another difference is that the torque box is not composed by a single piece, but is formed by a series of sections of the same length, each one of which is formed, in turn, by several thin plates, either curved or folded. The plates are stacked during transport, facilitating logistics to a great extent and achieving a suitable transport system. Once at the plant, each one of the sections is mounted starting with the plates, and the complete torque box is then mounted, connecting the different sectors with pieces known as diaphragms, which materialize the connection and prevent local dents from being produced in the cylinder, due to the point loads exerted by the pyramidal base supports of the concentric tube receiver.

The torque box so designed is responsible for withstanding the strains caused by the weight of the receiver, its own weight and the wind force. The torque box supports the triangular lattice structures, which in turn support the complete primary reflector, in the case of a continuous reflector, or some of its segments, in the case of a discontinuous reflector.

It also holds the intermediate pyramidal base supports that bear the receiver in the case of a concentric tube receiver, and the legs on which the structure assembly rests on the ground are fastened to the torque box.
2. Hexagonal frames surrounding the torque box: along its length, the torque box is surrounded by hexagonal frames in successive sections. The upper side of the hexagon holds the following: a lattice bar, whenever needed, the central segment of the primary reflector - in the case of a discontinuous reflector and if the number of sections into which the primary reflector is divided, is an odd number - and the secondary reconcentrator, when applicable. The frames also perform the function of connecting the triangular lattice structures to the torque box. The hexagonal frames are formed with L-sections, all of whose connections are formed with rivets or any equivalent connecting system.
3. Tight structure: the structure assembly is pre-tightened by means of two horizontal tie rods, thus optimizing its behaviour under flexion, thus avoiding the torque box from resting only on its legs. This problem could have been solved by increasing the thickness of the tube, which would provide greater stiffness, but would also have increased price and weight. The tie rods work by putting up resistance against flexure, which is likely to occur in any of the positions or orientations adopted by the torque box. Depending on said positions, one tie rod or the other, or both, will work, but they will always work by putting up resistance against deformation. The tie rods have binding points at the extremities due to which the desired pre-tightening can be provided, and intermediate through points that allow providing the necessary curvature and are able to maintain the tension.
4. Lattice pillars: responsible for supporting the secondary reconcentrator, when applicable, and in some cases, the receiver as well. These pillars rest on the upper segment of the hexagonal frame.
5. Pyramidal base supports: are installed in certain cases to support the receiver directly above the torque box, instead of installing lattice pillars on the hexagons. They rest directly on the torque box, taking advantage of its circular or multi-face polyhedric shape and without needing any other intermediate element.

These technical characteristics of the structure are the ones that distinguish the system from the existing state of the art. In addition to these characteristics, the structure has a surrounding triangular lattice structure, similar to the ones existing in the state of the art, whose purpose is to support the complete primary reflector, in the case of a continuous reflector, and the segments of the extremities of the reflector, in the case of a discontinuous reflector. This structure is formed with L-sections, with rivet connections or the like.

The characteristics described provide the new structure with great versatility, making it valid for any type of cylindrical solar collector, either parabolic, parametric, with continuous or discontinuous primary reflectors, with or without a secondary reconcentrator and for all types of receiver shapes. In addition, it solves the existing problems to date, in an efficient and economical manner, in terms of torsion and bending strains, structure transportation and mounting, as also allows a larger opening for greater solar gain, reducing wind load, and allowing the torque box to be brought closer to the receiver, improving the stability of the set.

### Description of the drawings

In order to complete the description being made, and with the purpose of facilitating a better understanding of the invention, attached is a set of drawings representing the following by way of non limitative examples:
Figure 1: elevated view of the structure of the preferred embodiment
Figure 2: lateral view of the structure of the preferred embodiment
Figure 3: perspective view of the structure of the preferred embodiment
Figure 4: detail of the connection of a pyramidal base support to the torque box
Figure 5: folded plates that make up each section of the torque box
Figure 6: connecting diaphragm of the sections making up the torque box

The references in the figures represent the following:
1. Central body or torque box
2. Eccentric tube receiver
3. Torque box section
4. Curved plates
5. Diaphragm
6. Pyramidal base support
7. Rivet
8. Hexagonal plates
9. Diaphragm spokes
10. Torque box cover connected to a module of the adjacent torque box
11. Rotation shaft of the collector
12. Torque box cover with a support for the receiver
13. Horizontal tie rod
15. Horizontal tie rod
16. Triangular lattice structure
17. Parametric segments of the receiver
17'. Parabolic segments of the receiver
18. Pyramidal base
19. Hexagonal frame
20. Lattice pillar

### Preferred embodiment of the invention

In order to achieve a better understanding of the invention, the solar collector module according to a preferred embodiment will be described below.

In this embodiment example, the collector that supports the structure is a parametric-cylindrical collector, with a discontinuous primary reflector divided into three sections: two parametric sections at its extremities (17) and a higher central parabolic section (17'). There is no secondary reconcentrator and the receiver is an eccentric tube receiver (2) and is supported on a lattice pillar (20) resting on the hexagonal frame (19).

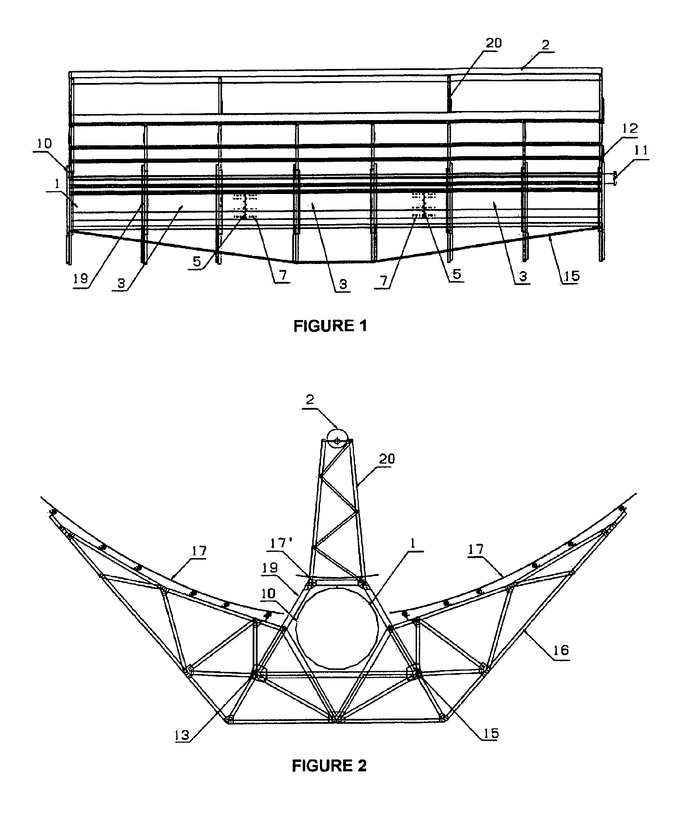

Figure 1 shows an elevated view of a preferred embodiment of the claimed structure. In said embodiment, the torque box or central body of the structure (1) has a total length of 12 meters. The torque box (1) is divided into three sections (3) of 4 meters each. In order to connect the sections (3) and form the complete tube (1), pieces known as diaphragms (5) are used.

In addition, the triangular lattice structure (16) rests on the torque box and the legs (not represented) on which the set of the structure rests on the ground are fastened to said torque box.

Two covers (10, 12) are placed on the extremities of the torque box (1). The rotation shaft of the collector (11) is located on one of the covers (12). The other cover (10) is used to connect this solar collector module to the one adjacent to it.

Figure 2 represents a profile view of the claimed structure. This view shows the hexagonal frame (19) surrounding the torque box (1). Along its length, the torque box (1) is reinforced in several sections due to these hexagonal frames (19). The upper side of the hexagon (19) is used to rest a lattice pillar (20) that supports the receiver (2). In addition, given that the primary reflector is discontinuous, the hexagonal frame (19) also supports the central parabolic segment (17'). The two sides of the hexagonal frame (19) adjacent to the upper one remain free. The three lower sides of the hexagon (19) allow carrying out the transition from the torque box (1) to the triangular lattice structures (16).

In addition to the torque box (1), the claimed structure comprises a triangular lattice structure (16), which consists of a surrounding structure to support the parametric sections (17) of the reflector. This structure is formed by L-sections, all of the connections being formed with rivets or equivalent connecting methods.

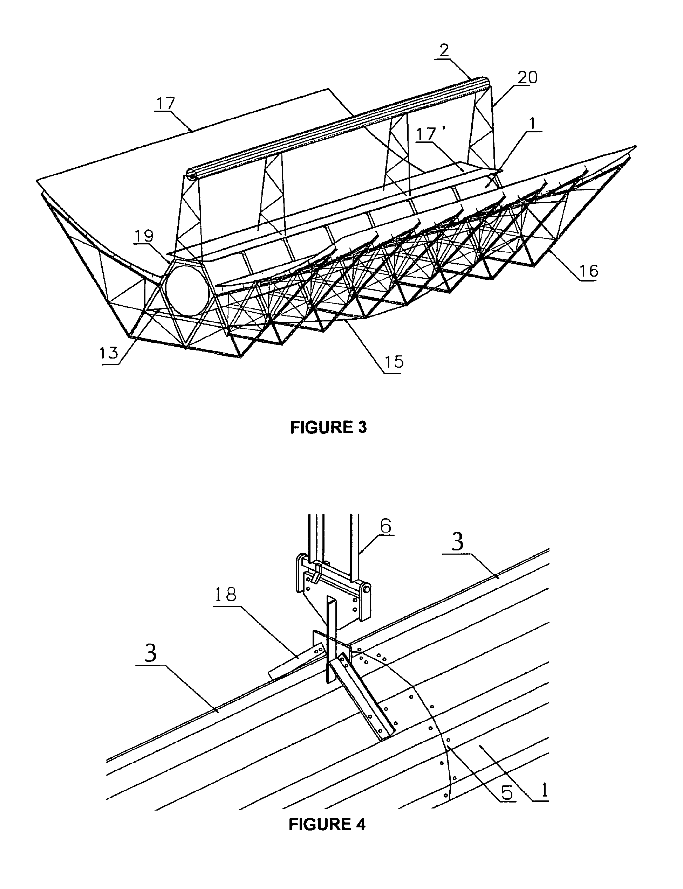

Figure 3 shows an axonometric perspective view of the structure, representing the horizontal tie rods (13, 15) that pre-tighten the structure assembly. Each one of these tie rods (13, 15) is located at each one of the sides of the torque box (1). Their purpose is to optimize the behaviour under flexion and to solve the flexure problem that occurs by having the torque box (1) rest only on the legs. Therefore, the tie rods work by putting up resistance against flexure, which is likely to occur in any of the positions adopted by the torque box (1). The tie rods have binding points at the extremities, which provide the desired pre-tightening whereas the intermediate through points allow giving them the necessary curvature and are able to maintain the tension.

Figure 4 represents the detail of the connection of the pyramidal base (18) supports (6) that can hold the receiver (2), to the torque box (1), when not installing the lattice pillars (20). The fact that the shape of the torque box (1) has changed and is a polyhedron (or a cylinder) allows simplifying the connecting element between the receiver (2) and the cylinder (1) to a great extent since, as shown in figure 4, the support (6) can rest on the torque box (1) with a simple pyramidal base (18), while with the triangular or square shape of the state of the art developments, a much more complex transition system needs to be introduced between both to adapt the shapes, which makes the mounting more complicated and expensive.

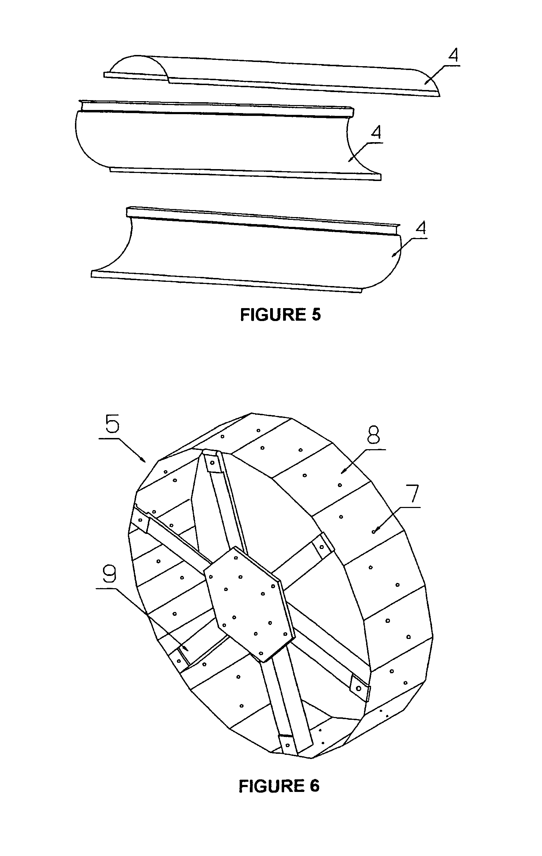

Figure 5 represents the plates (4) that form each one of the sections (3) of the torque box (1). In this preferred embodiment, each section (3) of the torque box (1) is formed by three folded or curved plates (4), which, when mounted, make up the polyhedric or cylindrical tube that is the torque box (1). They appear as curved plates in figure 5, but may also be formed using folds.

Figure 6 shows the detail of the geometry of the diaphragms (5) referred to in figure 1. Due to these, the connection between the different sections (3) making up the torque box (1) can be materialized, increasing the stiffness of the assembly and decreasing torsion strains. The diaphragms (5) connected to the plates (4) forming the sections (3) of the torque box (1) by means of riveting (7) or any other equivalent connecting system. They are formed by a hexagonal (8) or cylindrical plate (depending on the geometry of the torque box (1)), whose folds or curvature matches the folds or curvature of the plates (4) of the sections (3) of the torque box (1). They also comprise a series of spokes (9) that stiffen the assembly. For 12-meter tubes divided into three 4-meter sections, two diaphragms (5) are required.

The structure described is specially designed for its application in cylindrical solar collectors, but its extension to other fields of the industry requiring similar characteristics is not ruled out.

## Claims

1. Structure for cylindrical solar collector, of those formed by a lattice bar structure (16) with a beam or torque box (1) at the centre thereof, said structure being capable of holding receivers (2) of any shape and continuous or discontinuous primary reflectors (17, 17'), also of any shape (parabolic, parametric, etc.), and the structure can also hold a secondary reconcentrator, **characterized in that:**
- the central beam or torque box (1) is a cylinder or a multi-face polyhedron divided into various sections (3), each of the sections (3) in turn being formed by multiple plates (4);
- the surrounding triangular lattice structure (16) is formed with L-sections, all of the connections being formed with rivets or the like;
- comprises multiple hexagonal frames (19) along the length of the central beam or the torque box (1), surrounding and reinforcing it;
- and comprises multiple supports that hold the receiver above the torque box (1).

2. Structure for cylindrical solar collector according to claim 1, **characterized in that** the plates are folded or curved (4).

3. Structure for cylindrical solar collector according to claim 2, **characterized in that** the different sections (3) of the central body or torque box (1) are connected to one another by means of connecting elements known as diaphragms (5), which are formed by a folded or cylindrical plate (8) whose folds or curvature match the folds or curvature of the plates (4) of the sections (3) of the torque box (1).

4. Structure for cylindrical solar collector according to claim 3, **characterized in that** the diaphragms have a series of spokes (9) that stiffen the assembly.

5. Structure for cylindrical solar collector according to claim 1, **characterized in that** two covers (10, 12) are placed on the extremities of the torque box (1).

6. Structure for cylindrical solar collector according to claim 5, **characterized in that** the rotation shaft of the collector (11) is located in one of the covers (12).

7. Structure for cylindrical solar collector according to claim 5, **characterized in that** a cover (10) is intended to connect this solar collector module to the one adjacent to it.

8. Structure for cylindrical solar collector according to claim 1, **characterized in that** the supports (6) holding the receiver (2) rest on a pyramidal base directly above the torque box (1).

9. Structure for cylindrical solar collector according to claim 1, **characterized in that** the supports (20) holding the receiver (2) rest directly on the upper side of the hexagonal frame (19).

10. Structure for cylindrical solar collector according to claim 9, **characterized in that** the supports (20) holding the receiver (20) also hold the secondary reconcentrator.

11. Structure for parametric-cylindrical solar collector according to claim 9, **characterized in that** the supports (20) are lattice pillar-shaped.

12. Structure for cylindrical solar collector according to claim 1, **characterized in that** the upper side of the hexagon supports the central segment (17') of the discontinuous primary reflector.

13. Structure for cylindrical solar collector according to claim 1, **characterized in that** the two sides of the hexagonal frame (19) adjacent to the upper one remain free.

14. Structure for cylindrical solar collector according to claim 1, **characterized in that** the three lower sides of the hexagon (19) carry out the transition from the torque box (1) to the triangular lattice structure (16).

15. Structure for cylindrical solar collector according to claim 1, **characterized in that** the structure assembly is tightened.

16. Structure for cylindrical solar collector according to claim 14, **characterized in that** the structure is tightened by means of two horizontal tie rods (13, 15), each one of which is located at each side of the torque box (1).

17. Structure for cylindrical solar collector according to claim 15, **characterized in that** the tie rods (13, 15) have binding points where they are pre-tightened and intermediate through holes, which maintain the curvature and tension.

18. Structure for cylindrical solar collector according to claim 16, **characterized in that** the binding points are located at the extremities of the tie rods (14, 15).

19. Structure for cylindrical solar collector according to claim 1, **characterized in that** the triangular lattice structure (16) supports the complete primary reflector, in the case of continuous reflectors, and the segments of the extremities of the reflector in the case of discontinuous reflectors.
